# EUROPEAN PATENT APPLICATION

(11) **EP 2 324 709 A1**
(43) Date of publication of application: **25.05.2011**
(21) Application number: 09806471.0
(22) Date of filing: 23.07.2009
(51) Int. Cl.: A01N 35/06, A01N 41/04

(54) **USE OF MENADIONE TO INCREASE SALINE STRESS TOLERANCE IN PLANTS**

(30) Priority: 04.08.2008 ES 200802324
(71) Applicant: Consejo Superior de Investigaciones Cientificas (CSIC), 28006 Madrid (ES); Universidad De La Laguna, 38207 La Laguna (Santa Cruz de Tenerife) (ES)
(72) Inventor: BORGES RODRÍGUEZ, Andrés A., E-38205 La Laguna (Santa Cruz de Tenerife) (ES); BORGES PÉREZ, Andrés A., E-38205 La Laguna (Santa Cruz de Tenerife) (ES); JIMÉNEZ ARIAS, David, E-38205 La Laguna (Santa Cruz de Tenerife) (ES); MARTÍN RODRÍGUEZ, Vanesa, E-38205 La Laguna (Santa Cruz de Tenerife) (ES); EXPÓSITO RODRÍGUEZ, Marino, E-38205 La Laguna (Santa Cruz de Tenerife) (ES); LUÍS JORGE, Juan Cristo, E-38207 La Laguna (Santa Cruz de Tenerife) (ES)
(74) Representative: Pons Ariño, Angel
(86) International application number: PCT/ES2009/070302
(87) International publication number: WO 2010/018281

(57) **Abstract**

The invention relates to the use of compositions containing menadione (vitamin K3 or pro-vitamin K) and/or some of the water-soluble derivatives thereof in order to improve saline stress tolerance in affected plants. The treatment comprises the application of solutions containing the aforementioned compounds by any means by which the compositions are brought into contact with any part of the plant and/or seeds.

## Description

This invention is related to the use of compositions containing menadione (vitamin K₃ or provitamin K) and/or some of its water soluble derivatives to improve tolerance to salt stress in affected plants. The treatment is carried out by the application of solutions containing these compounds by any means that puts the compositions of the invention into contact with any part of the plant and/or seeds.

### STATE OF PRIOR ART

Soil salinity is one of the main factors increasingly affecting farming regions at a world level, especially in dry and semi-arid production regions.

Salinity is a serious problem in many dry regions where irrigation has been slowly increasing soluble salts in the soil and reducing the productive potential of many crops. Salinity can inhibit the germination and growth of plants, thus reducing the yield or the quality of the harvest.

Soil salinity has been affecting human kind since the start of agriculture. Anthropic activity has increased the extent of saline areas as irrigated regions have expanded with the implementation of huge hydrological projects that have caused changes in the balance of water and salts in hydrogeological systems. The proportion of land affected by salinity is estimated to be 10% of the world total and it is estimated that between 25% and 50% of the irrigated areas are salinized (Rhoades et al., 1992. FAO Irrigation and Drainage paper. FAO, United Nations, Rome, pp 48.).

In areas affected by salinity, the main solution has been the replacement of sensitive by other more tolerant crops such as sugar beet, barley, cotton, etc., which replace traditional crops. However, this option may not be appropriate due to market problems, the particular climate or the population's nutritional needs, so it would be better to have tolerant varieties of the main crops or to increase their tolerance.

Salinity affects the growth and production of crops by reducing the water potential of the solution of the soil, thereby reducing the availability of water and creating a nutritional imbalance given the higher concentration of elements (Na⁺, Cl⁻) that can interfere with the mineral uptake and cellular metabolism. Consequently, the various effects observed at different scales, from reduction of turgidity and growth to loss of cellular structure by membrane disruption and inhibition of enzymatic activity, are the combined product of water stress, ionic toxicity and nutritional imbalance. One cause of the reduction in growth is inadequate photosynthesis due to stomatal closure and, as a consequence, the limitation of CO₂ uptake (Leidi and Pardo, 2002. Revista de investigaciones de la facultad de Ciencias Agrarias, N° II).

In the last 25 years, inventors have been researching the effect that plant growth regulators might have on reinforcing natural defence mechanisms and the consequent induction of tolerance to salinity as well as resistance to pathogens and pests in treated plants and other positive effects. In this sense, researchers have observed that a specific type of plant growth regulators, the water-soluble derivatives of vitamin K, are able to stimulate natural defence mechanisms in treated plants and consequently induce the resistance to attacks by pathogens and pests (WO/1995/03702), and also counteract the damage caused by pesticides and herbicides (WO/2003/105586).

The inventors have also obtained surprising results with respect to the use of a water soluble derivative of vitamin K₃, menadione sodium bisulphite (MSB), in the cultivation of bananas, stimulating the early flowering of treated plants compared to untreated plants (WO/1996/28026).

In addition, plants treated with water soluble derivatives of vitamin K3, especially with MSB, originate the development of antifeedant properties against attack by pathogens and pests (Patent ES-200601179).

The researchers of the present invention have continued experimenting on the effects of MSB in relation to salt stress.

Surprisingly, plants treated with these compositions have higher tolerance to salt stress, especially to conditions of high salinity. The harmful effects on crops caused by salinity are counteracted, at least in part, by treatment with MSB, which results in an improvement in quality of the harvest and increase in its yield.

The compounds described in the present invention are systemic, biodegradable, not pesticides, non-toxic and harmless from the environmental point of view, and are not dangerous for plants, animals and people. They can also be mixed with various additives, for example: organic and inorganic fertilizers, insecticides, nematicides, fungicides, bactericides or herbicides.

In relation to stimulation of plant defensive systems by menadione, the patent WO/2003/105586 reveals the use of compositions containing menadione and/or some of its water soluble derivatives to stimulate natural defence mechanisms in plants, partly counteracting the chemical damage caused by pesticides and herbicides. Similarly, the patent WO/1996/28026 is based on the same compounds as the previous patent in order to induce resistance of plants to pathogens and pests.

Furthermore, patent WO/2005/054156 mentions that plants treated with a fertilizer composed of vitamin K and/or its derivatives, alginic acid and betaine, are capable both of improved growth and increased tolerance to abiotic and osmotic stress.

The present invention refers to a concept that is more specific than abiotic stress, which is salt stress. The effect of improving tolerance to abiotic and osmotic stress, mentioned in patent WO/2005/054156, also cannot be attributed to vitamin K or its derivatives since, as explained earlier, tolerance to these stresses is due to alginic acid and betaine, respectively.

Salt stress is a type of abiotic stress and osmotic stress is one of the effects of salt stress. As was mentioned in the third paragraph of this introductory section, salinity causes stress related both to water stress and cellular osmosis as well as to toxicity and nutritional imbalances due to the sodium ion and other ions in the case of salts other than sodium chloride.

It is known that plant defensive mechanisms against stresses of different types can share some common elements such as, for example, signal transduction routes, but the complexity of these responses is such that stresses to plants caused by pathogens, pesticides and herbicides cannot be considered to articulate the same processes despite being able to share some defensive response mechanisms.

This invention resolves the difficulty of achieving optimum growth in plants subjected to salt stress. The use of compositions containing menadione and/or some of its water soluble derivatives generates a surprising and unexpected result in those plants subjected to salt stress and treated with these compositions.

### DESCRIPTION OF THE INVENTION

The present invention is based on the use of compositions containing menadione (vitamin K₃) and/or at least one of its water-soluble derivatives that, when applied to plants and/or seeds, are capable of bio-stimulating natural defence mechanisms of plants to salt stress.

The proposed invention meets a need that has been felt for a long time as it describes the use of a class of compounds that are systemic, biodegradable, not pesticides, non-toxic and harmless from the environmental point of view, and that are not dangerous for plants, animals and people. Consequently, the present invention provides a safe tool for combating loss of agricultural yield and abandonment of cultivation due to salinization of soils (without the use of genetically modified organisms).

In this sense, a first aspect of the invention is based on the use of an aqueous composition comprising menadione and/or some of its water soluble derivatives to induce tolerance to salt stress in plants and/or seeds.

Water soluble derivatives of menadione may be all those salts that can be dissolved in water such as menadione sodium bisulphite (MSB), menadione potassium bisulphite, menadione ammonium bisulphite or menadione magnesium bisulphite, menadione nicotinamide bisulphite (MNB), menadione p-aminobenzoic acid bisulphite, menadione histidine bisulphite, menadione adenine bisulphite, menadione nicotinic acid bisulphite or menadione tryptophan bisulphite, but without prejudice to other salts not cited here.

A second aspect of the present invention is based on the use of an aqueous composition to induce tolerance to salt stress in plants and/or seeds comprising:
a. 3.3 x 10⁻⁷ to 0.66 mM (0.0001 to 200 ppm.) of menadione (vitamin K₃);
b. 3.3 x 10⁻⁶ to 33.3 mM (0.001 to 10000 ppm) of a water soluble derivative of vitamin K₃, characterised by being a bisulphite selected from the list comprising: menadione sodium bisulphite (MSB), menadione potassium bisulphite, menadione ammonium bisulphite or menadione magnesium bisulphite;
c. 3.3 x 10⁻⁵ to 33.3 mM (0.01 to 10000 ppm) of a derivative of vitamin K₃ that is poorly soluble in water, characterised by being a bisulphite selected from the list comprising: menadione nicotinamide bisulphite (MNB), menadione p-aminobenzoic acid bisulphite, menadione histidine bisulphite, menadione adenine bisulphite, menadione nicotinic acid bisulphite and menadione tryptophan bisulphite;
d. or any combination of the compositions according to (a), (b) and/or (c).

All these compounds are systemic, biodegradable, not pesticides, non-toxic and harmless from the environmental point of view, and are not dangerous for plants, animals and people. These compounds originate the development of properties in crops that counteract stress caused by salinity.

The concentration of the active components of the compositions depends on the type of plant, its development phase and the frequency and form of application of the compositions.

The effectiveness of the active components of the compositions, referring to vitamin K₃, MSB and MNB is expected at the following concentrations: vitamin K₃ between 3.3 x 10⁻⁷ to 0.66 mM (0.0001 to 200 ppm); MSB between 3.3 x 10⁻⁶ to 33.3 mM (0.001 to 10000 ppm); MNB between 3.3 x 10⁻⁵ to 33.3 mM (0.01 to 10000 ppm).

In a preferred embodiment, the compound is menadione sodium bisulphite (MSB).

A third aspect of the invention is the use of a composition according to the previous compounds and their concentrations to induce tolerance to salt stress in plants by application via spraying the aboveground parts.

The physiological transport principles of the compounds absorbed by the leaves following spraying are similar to those absorbed via the roots; however, the movement of the compounds applied to the leaves is not the same in time and form to that occurring from the roots to the rest of the plant. Foliar absorption is more effective when the conditions of absorption from the soil are adverse such as, for example, in the case of drought, salt stress, extreme temperatures and other stresses. It is also much easier to obtain a uniform distribution, in contrast to application of granules or physical mixtures.

Application to the surface of the plant of one of the compositions described above, containing an effective amount of one or more of the compounds described, originates a systemic defensive response and, consequently, the treatment of part of the plant causes biostimulation of defence mechanisms throughout the whole plant.

A fourth aspect of the present invention is the use of a composition according to the previous compounds of menadione and/or their water soluble derivatives to induce tolerance to salt stress in plants by application to the stem by injection.

A fifth aspect of the present invention is the use of a composition according to the compounds and concentrations above, characterised in that they are applied to the soil or other cultivation substrate, to irrigation water (or cultivation solution) or by immersion of the root system of the plants and/or seeds.

The application of the aqueous compositions by immersion of the root part of the plant and also the seeds is performed for a time and with a concentration that depends on the type of plant, its development status and the frequency and form of application of the compositions. In the case of seeds that require a special scarification treatment or removal of specific coatings to facilitate germination, the process of immersion in the aqueous compositions of the present invention can be performed more effectively after the removal of the coatings in order to facilitate the absorption of the active compounds. It is also possible to submerge the seeds in whatever their state of germination.

The forms of application cited above do not limit the use of other types of application of the compositions containing menadione and/or any of its water soluble derivatives to plants.

A sixth aspect of the invention refers to the use of a composition according to the compounds and their concentrations above, that additionally comprise an additive selected from organic or inorganic fertilizers, insecticides, nematicides, fungicides, bactericides or herbicides.

In this way, by applying compositions containing menadione and/or any of its water soluble derivatives together with additives, either to provide nutrients or to treat specific infections or pests, the costs of the treatments applied in a coordinated way are not increased.

A seventh aspect of the present invention is the specific use of any of the compositions containing menadione and/or any of its water soluble derivatives mentioned above where the composition is applied to plants and/or seeds of the *Solanum licopersicum* species. In a preferred embodiment, the composition is applied to seeds of the *Solanum licopersicum* species by immersion. In another preferred embodiment, seeds of *Solanum licopersicum* are submerged in an aqueous solution with a concentration of 10 to 300 mM (3000 to 90000 ppm) of menadione sodium bisulphite (MSB).

An eighth aspect of the present invention is the specific use of any of the compositions containing menadione and/or any of its water soluble derivatives mentioned above where the composition is applied to plants and/or seeds of the *Arabidopsis thaliana* species. In a preferred embodiment, the application of the compositions is performed by foliar spraying of the plants of said species. In another preferred embodiment, the composition is menadione sodium bisulphite (MSB) and is used at a concentration of 0.1 to 0.3 mM (30 to 90 ppm).

Throughout the description and the claims, the word "comprise" and its variants are not intended to exclude other technical characteristics, additives, components or steps. For experts in the field, other objects, advantages and characteristics of the invention will become apparent partly from the description and partly from the practice of the invention. The following examples are provided by way of illustration and are not intended to be limiting of the present invention.

### DESCRIPTION OF THE DRAWINGS

### EXAMPLES

The invention is illustrated below by means of two examples carried out with a plant of horticultural interest and a certain capacity for resistance to salinity, *Solanum licopersicum,* and a model plant, *Arabidopsis thaliana*, sensitive to salt stress.

### EXAMPLE 1

**Description of the experiment:** tomato seeds were subjected to immersion treatment for 6 hours in a solution of 20 mM MSB (6000 ppm) after which they were removed and left in distilled water for a period of 24 hours. Control seeds remained submerged in distilled water for 24 hours prior to seeding in universal substrate. When the seeds had germinated, the tomato seedlings were watered every 24 hours for a maximum of 7 days with a 200 mM NaCl saline solution.

During the experiment, measurements of fluorescence of chlorophyll A were taken leading to determination of how salt stress affected the photosynthetic capacity of the plant. The data were analysed by the JIP-test. The idea of the JIP-test is based on the theory of energy fluxes in membranes (Strasser, 1978. Chloroplast Development. Elsevier/North Holland, pp. 513-524; Strasser,1981. Balaban International Science Services, Philadelphia, PA, pp. 727-737). The JIP-test defines the maximum energy fluxes in the cascade of events taking place during absorption (ABS₀), capture (TR₀), transport (ET₀) and dissipation (DI₀). At the same time, it establishes a relation with the experimental fluorescence data between the minimum F₀ and maximum F_{M} values. These parameters show structural and functional information (as they are phenomenological fluxes or indices of vitality or PI, PI_{ABS}, PI_{CS}), which enable quantification of the behaviour of photosystem II in various experimental conditions (Strasser et al., 2004. Advances in Photosynthesis and Respiration. 19: 321-362).

Table 1 shows the mean values of the variation of different fluorescence parameters (F₀, F_{M}, Fᵥ/F_{M} and PI) against time for control seeds and seeds treated with 20 mM MSB (6000 ppm). The table shows that plants from seeds treated with distilled water, or controls, suffered much more from the drastic conditions of salt stress in their photosynthetic efficiency of photosystem II than those that were previously treated with MSB. Initial and maximum fluorescent values (F₀ and F_{M}) tended to stabilise in those plants from seeds that were treated with MSB. The parameter PI, which expresses the functional efficiency of photosystem II, clearly shows this protection induced by MSB, with values ten times higher than those shown by control plants.

**Table 1. Changes shown by tomato plants subjected to salt stress for one week in the values of initial fluorescence (F₀), maximum fluorescence (F_{M}), maximum quantum efficiency of photosystem II (F_{V}/F_{M}) and functional efficiency of photosystem II (PI).**

| **Days** | | | | |
|---|---|---|---|---|
| | | **1** | **3** | **7** |
| **Control** | **F₀** | 686 ± 31 | 673 ± 28 | 962 ± 45 |
| | **F_{M}** | 3466 ± 123 | 3429 ± 145 | 2152 ± 136 |
| | **F_{V}/F_{M}** | 0.80 ± 0.01 | 0.80 ± 0.02 | 0.55 ± 0.05 |
| | **PI** | 3.18 ± 0.83 | 3.33 ± 0.76 | 0.28 ± 0.34 |
| | | | | |
| **MSB (20 mM)** | **F₀** | 715 ± 25 | 690 ± 37 | 724 ± 15 |
| | **F_{M}** | 3538 ± 117 | 3524 ± 143 | 3431 ± 129 |
| | **Fv/F_{M}** | 0.80 ± 0.01 | 0.80 ± 0.02 | 0.79 ± 0.03 |
| | **PI** | 2.94 ± 0.25 | 3.18 ± 0.45 | 2.51 ± 0.47 |

Mean values of 10 plants per treatment. Similar results were obtained in independent experiments.

### EXAMPLE 2

Description of the experiment: Four week old *Arabidopsis thaliana* seedlings were treated by foliar spray with a solution of 0.2 mM (60 ppm) MSB 24 hours before being subjected to severe salt stress by continuous watering every 24 hours for a maximum of 7 days with a 200 mM NaCl saline solution as in example 1. The following table shows the tolerance to salinity induced by the prior MSB treatment. In the same way as described in example 1, during the experiment, measurements of fluorescence of chlorophyll A were taken leading to determination of how salt stress affected the photosynthetic capacity of the plant. The data were analysed by the JIP-test in the same way as in the previous example.

**Table 2. Changes shown by Arabidopsis plants subjected to salt stress for one week in the values of initial fluorescence (F₀), maximum fluorescence (F_{M}), maximum quantum efficiency of photosystem II (F_{V}/F_{M}) and functional efficiency of photosystem II (PI).**

| **Days** | | | | |
|---|---|---|---|---|
| | | **1** | **3** | **7** |
| **Control** | **F₀** | 699 ± 22 | 725 ± 34 | 807 ± 45 |
| | **F_{M}** | 2885 ± 111 | 2890 ± 117 | 2795 ± 125 |
| | **F_{V}/F_{M}** | 0.74 ± 0.02 | 0.75 ± 0.03 | 0.73 ± 0.03 |
| | **PI** | 0.79 ± 0.12 | 0.71 ± 0.09 | 0.69 ± 0.15 |
| | | | | |
| **MSB (20 mM)** | **F₀** | 698 ± 26 | 668 ± 45 | 734 ± 54 |
| | **F_{M}** | 2922 ± 99 | 2956 ± 112 | 3119 ± 121 |
| | **F_{V}/F_{M}** | 0.76 ± 0.04 | 0.77 ± 0.03 | 0.76 ± 0.01 |
| | **PI** | 0.80 ± 0.13 | 0.85 ± 0.18 | 0.84 ± 0.15 |

Mean values of 10 plants per treatment. Similar results were obtained in independent experiments.

In this way in the table above, the mean values of the changes in the different fluorescence parameters (F₀, F_{M}, Fᵥ/F_{M} and PI) were analysed against time for controls and seedlings treated with 0.2 mM MSB (60 ppm). Table 2 shows that in plants treated with distilled water, or controls, the values of maximum fluorescence (F_{M}), maximum quantum efficiency of photosystem II (F_{V}/F_{M}) and functional efficiency of photosystem II (PI) were consistently reduced, except for the values of initial fluorescence (F₀). However, under the same experimental conditions, plants treated with MSB did not show these changes in the chlorophyll fluorescence parameters, thus demonstrating the protection provided by MSB in conditions of salt stress imposed on the plants that were previously treated with MSB. The parameter PI again clearly showed this protection of photosystem II induced by MSB.

## Claims

1. Use of an aqueous composition comprising menadione and/or any of its water soluble derivatives to induce tolerance to salt stress in plants and/or seeds.

2. Use of an aqueous composition to induce tolerance to salt stress in plants and/or seeds comprising:
a. 3.3 x 10⁻⁷ to 0.66 mM of menadione (vitamin K₃);
b. 3.3 x 10⁻⁶ to 33.3 mM of a water soluble derivative of vitamin K₃, **characterised by** being a bisulphite selected from the list comprising: menadione sodium bisulphite (MSB), menadione potassium bisulphite, menadione ammonium bisulphite and menadione magnesium bisulphite;
c. 3.3 x 10⁻⁵ to 33.3 mM of a derivative of vitamin K₃ that is poorly soluble in water, **characterised by** being a bisulphite selected from the list comprising: menadione nicotinamide bisulphite (MNB), menadione p-aminobenzoic acid bisulphite, menadione histidine bisulphite, menadione adenine bisulphite, menadione nicotinic acid bisulphite and menadione tryptophan bisulphite;
d. or any combination of the compositions according to (a), (b) and/or (c).

3. Use according to claims 1 and 2 where the compound is menadione sodium bisulphite (MSB).

4. Use of a composition according to claims 1 to 3, **characterised in that** it is applied to the aboveground part of the plant by spraying.

5. Use of a composition according to claims 1 to 3, **characterised in that** it is applied to the stem of the plant by injection.

6. Use of a composition according to claims 1 to 3, **characterised in that** it is applied to the soil or other culture substrate, to irrigation water (or culture solution) or by immersion of the root system of the plants and/or seeds.

7. Use of a composition according to claims 1 to 3, which additionally comprises an additive selected from organic or inorganic fertilisers, insecticides, nematicides, fungicides, bactericides or herbicides.

8. Use according to claims 1 to 7, where the composition is applied to plants and/or seeds of the *Solanum licopersicum* species.

9. Use according to claim 8, where the composition is applied to seeds by immersion.

10. Use according to claim 9, where the concentration of menadione sodium bisulphite (MSB) is between 10 mM and 300 mM.

11. Use according to claims 1 to 7, where the composition is applied to plants and/or seeds of the *Arabidopsis thaliana* species.

12. Use according to claim 11, where the composition is applied by foliar spraying.

13. Use according to claim 12, where the concentration of menadione sodium bisulphite (MSB) is between 0.1 mM and 0.3 mM.
